# EUROPÄISCHE PATENTANMELDUNG

(11) **EP 3 420 815 A1**
(43) Veröffentlichungstag der Anmeldung: **02.01.2019**
(21) Anmeldenummer: 17075011.1
(22) Anmeldetag: 27.06.2017
(51) Int. Cl.: A01K 91/02, A01K 97/02

(54) **FÖRDERSCHNECKENEINRICHTUNG FÜR EIN BAITBOAT/ FUTTERBOOT**

(71) Anmelder: Radmacher, Alexander, 47877 Willich (DE)
(72) Erfinder: Radmacher, Alexander, 47877 Willich (DE)
(74) Vertreter: Waschau, Gregor

(57) **Zusammenfassung**

Bei der Förderschneckenvorrichtung für ein Baitboat/Futterboot (12) handelt es sich um eine technische Erfindung im Segment des Angelsports. Durch den Einbau der Förderschneckeneinrichtung in ein herkömmliches Baitboat/Futterboot (12), welches zum Anfüttern von Fischen an schwer zugänglichen Gewässern eingesetzt wird, kann das Futtermittel linien- bzw. straßenförmig auf dem Gewässergrund abgelegt werden, statt, wie bisher, in Futterhaufen.

Die Förderschneckenvorrichtung wird passgenau in die Futterschächte des Baitboats/Futterboots (12) eingesetzt und mittels elektrischer Klinkensteckerverbindung mit der Bootssteuerung verbunden. Das Baitboat/ Futterboot fährt an die gewünschte Postion im Gewässer, die Förderschneckenvorrichtung wird dann ferngesteuert aktiviert. Nach Öffnen der Futterklappen kann dann das Futtermittel durch die Drehbewegung der Förderschneckenvorrichtung und durch gleichzeitiges Fahren des Baitbootes/ Futterbootes sukzessive ausgebracht werden.

## Beschreibung

Die Erfindung betrifft eine Förderschneckenvorrichtung [(10a) linksseitig, (10b) rechtsseitig] für die Montage in einem Baitboat/ Futterboot (12) zum sukzessiven Ausbringen von Futtermitteln zwecks Anfütterung von Fischen an individuell ausgewählten Postionen auf einem Gewässer.

Das Baitboat (12) ist mit 2 Futterschächten [(13a) linksseitig, (13b) rechtsseitig] ausgestattet, in die feuchte oder trockene, fein- oder grobkörnigem Futtermittel für Fische eingefüllt werden. Die herkömmlichen Futterschächte des Baitboats sind mit Futterklappen ausgestattet, die sich ferngesteuert an der individuell ausgewählten und mit dem Baitboat angefahrenen Gewässerposition öffnen lassen, um das Futtermittel an dieser Position vollständig auszubringen. Dabei wird das in den Futterschächten geladene Futtermittel bei Öffnen der Futterklappen bislang vollständig an einer einzigen Stelle ausgebracht, wobei sich auf dem Gewässergrund Futterhaufen bilden.

Durch die vorliegende Erfindung einer Förderschneckenvorrichtung [(10a) linksseitig, (10b) rechtsseitig] zur Montage in einem Baitboat wird eine Möglichkeit bereitgestellt, die Bildung von Futterhaufen auf dem Gewässergrund zu verhindern. Die Erfindung ersetzt die Futterklappen im Baitboat und schafft die Möglichkeit, Futtermittel sukzessive auszubringen und linien- bzw. straßenförmig auf dem Gewässergrund abzulegen.

Die Förderschneckenvorrichtung [(10a) linksseitig, (10b) rechtsseitig] mit Trichteraufsatz [(11a) linksseitig, (11b) rechtsseitig] wird in die Futterschächte [(13a) linksseitig, (13b) rechtsseitig] des Baitboats (12) nach Entfernen der Futterklappen eingelegt und mittels elektrischer Klinken - Steckverbindungen an die Bootssteuerung angeschlossen. Die Schneckenvorrichtung [(10a) linksseitig, (10b) rechtsseitig] ist passgenau links-, bzw. rechtsseitig gearbeitet, eine zusätzliche Befestigung entfällt.

Das feuchte oder trockene, fein- oder grobkörnige Futtermittel wird direkt in die nach oben offenen Futterschächte [(13a) linksseitig] (13b) rechtsseitig], in welche vorher, wie beschrieben die Schneckenvorrichtung [(10a) linksseitig (10b) rechtsseitig] mit Trichteraufsatz [(11a) linksseitig] (11b) rechtsseitig] eingesetzt wurde, eingefüllt.

Das Baitboat (12) wird mittels Fernsteuerung zu der gewünschten Position auf einem Gewässer gefahren.

Nach Erreichen der gewünschten Postion wird die Förderschneckenvorrichtung ferngesteuert aktiviert. Auf einer Welle drehend fördert das Schneckenwendel der Förderschneckenvorrichtung das geladene Futtermittel zum Trog- bzw. Schneckenende, welches dort über eine Öffnung verfügt. Das zum Ende der Förderschneckenvorrichtung geförderte Futtermittel tritt durch die Öffnung aus und wird so in das Gewässer ausgebracht.

Durch eine stufenlos wählbare Drehgeschwindigkeit der Förderschnecke und gleichzeitiges Fahren des Baitboats (12) wird das Futtermittel nach Bedarf sukzessive ausgebracht und linien- bzw. straßenförmig auf dem Gewässergrund abgelegt.

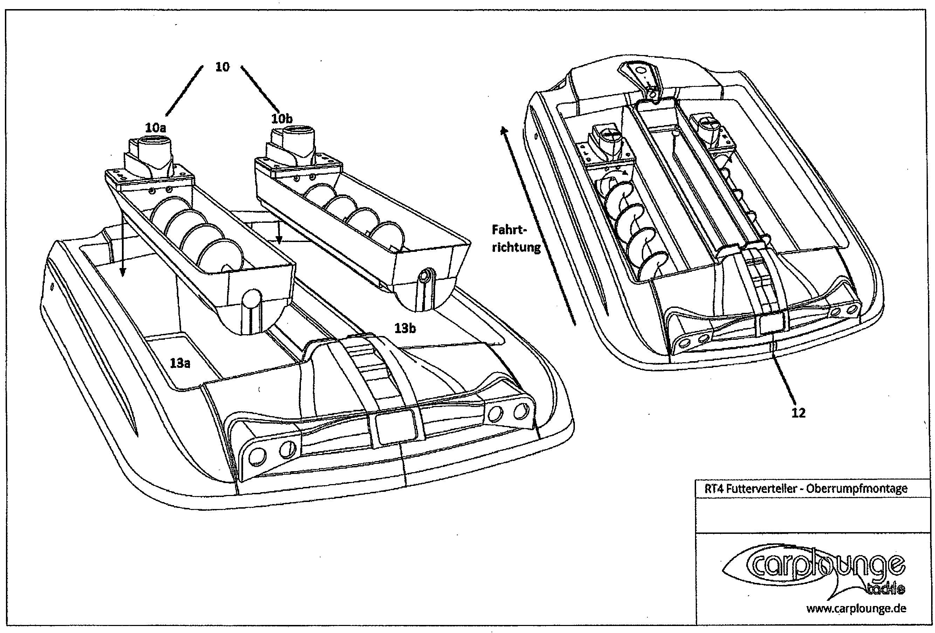

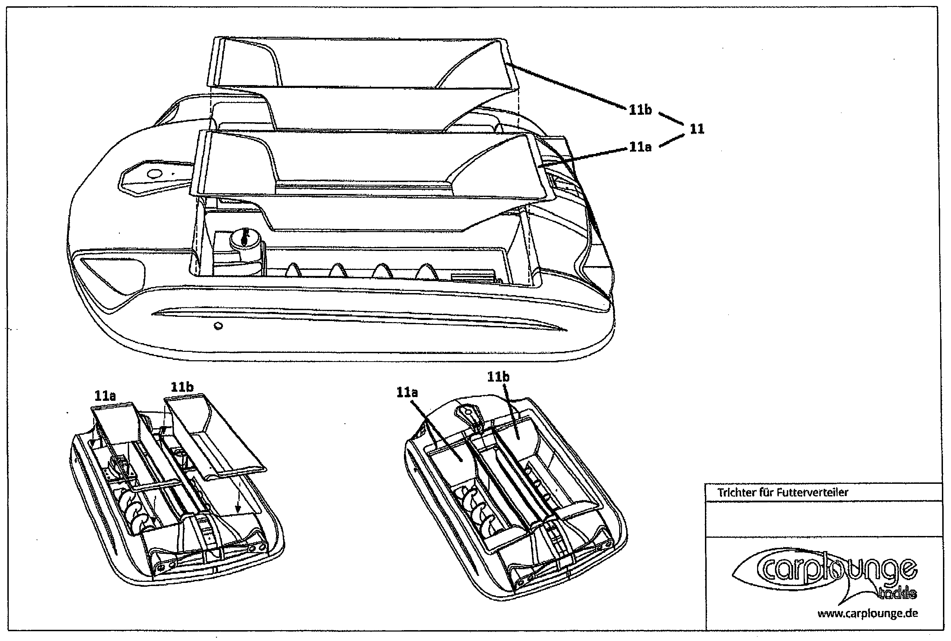

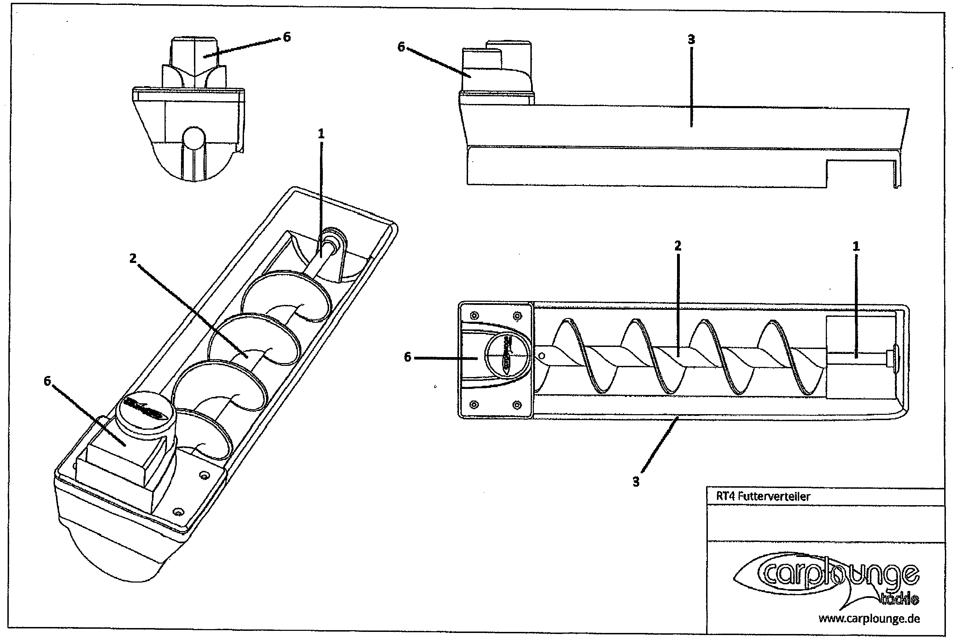

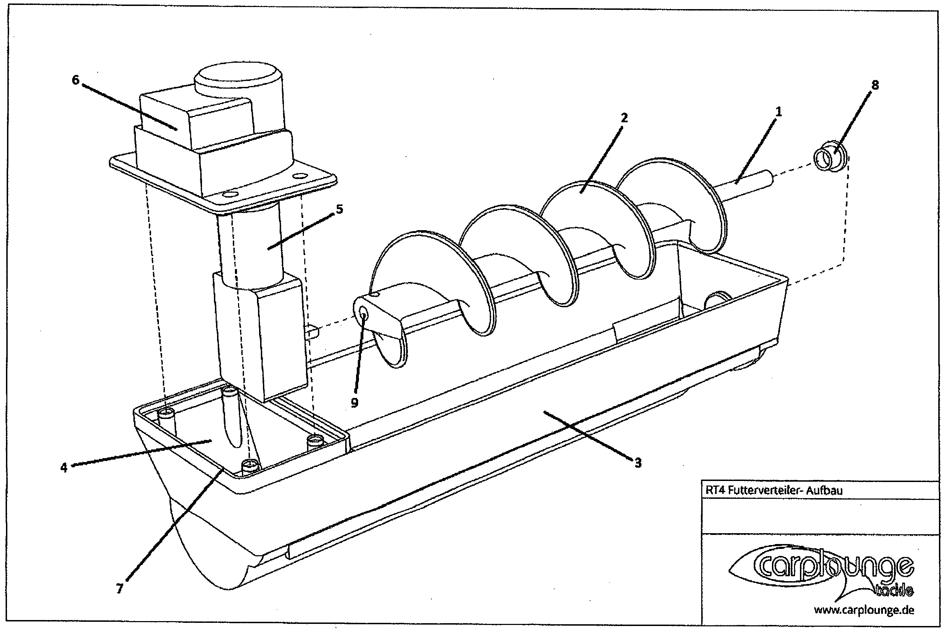

## Patentansprüche

1. Förderschneckenvorrichtung mit Trichteraufsatz für ein Baitboat (12) für feuchtes oder trockenes, fein- oder grobkörniges Futtermittel, bestehend aus einer drehbaren Welle (I) und einem auf der Welle angebrachten Schneckenwendel (2), um das auszubringende Futtermittel zum Trog- bzw. Wendelende der Schnecke zu fördern. Das Hauptgehäuse (3) ist als Halbschale ausgebildet, die sich nach oben trichterförmig öffnet. Auf der Antriebsseite ist eine wasserdichte Antriebsaufnahme (4) eingearbeitet, in welche die Antriebseinheit (5) mit Antriebszapfen eingesetzt und wendelseitig mit 2 Schrauben verschraubt wird. Der Antriebszapfen treibt die Schneckenwelle an. Die Motorabdeckung (6) ist hütchenförmig ausgebildet, mit einer wasserdichten Kabeldurchführung versehen und wird mit 4 Schrauben und eingelegter Dichtung (7) verschlossen und verschraubt.
Im hinteren Teil des Hauptgehäuses (3) befindet sich im unteren Trogbereich eine Öffnung, aus der das dorthin geförderte Futtermittel austreten kann. Die Antriebswelle ist im Öffnungsbereich wendelfrei und drehbar in einem wartungsfreien Kunststoff - Gleitlager (8) gelagert. Auf der Antriebsseite ist im Schneckenwendel (2) eine Aufnahme (9) für den Antriebszapfen eingearbeitet. Das Schneckenwendel wird auf den Antriebszapfen aufgesteckt und mit einer Schraube gesichert.
Die Förderschneckenvorrichtung mit Gehäuse [(IOa) linksseitig, (10b) rechtsseitig], wie oben beschrieben, wird nach Entfernen der Futterklappen des Baitboats in die Futterschächte [(13a) linksseitig, (13b) rechtsseitig] an Stelle der Futterklappen eingesetzt. Die Förderschneckenvorrichtungen sind passgenau rechts-, bzw. linksseitig gearbeitet, eine zusätzliche Befestigung entfällt. Der passend gefertigte Trichteraufsatz [(11a) linksseitig (11b) rechtsseitig] wird nach Einbau der Förderschneckenvorrichtung auf diese aufgesetzt Er sorgt für eine saubere Einfüllung des Futtermittels und schützt den Antriebsbereich (4-7) vor Futtermittelablagerungen.

## Geänderte Patentansprüche

### Geänderte Patentansprüche gemäss Regel 137(2) EPÜ.

1. Förderschneckenvorrichtung mit Trichteraufsatz zum Einbau in ein Baitboat (I2), bestehend aus einer drehbaren Welle (I) und einem auf der Welle angebrachten Schneckenwendel (2).
